# EUROPEAN PATENT SPECIFICATION

(11) **EP 0 816 697 B1**
(45) Date of publication and mention of the grant of the patent: **03.12.2003**
(21) Application number: 97201910.3
(22) Date of filing: 21.06.1997
(51) Int. Cl.: F16C 32/06, F16C 17/20

(54) **Hydrostatic bearing particularly for hydraulic machines of hydroelectric units**
Hydrostatisches Lager für hydraulische Maschinen von hydroelektrischen Einheiten
Palier hydrostatique en particulier pour machines hydrauliques d'ensembles hydroélectriques

(30) Priority: 25.06.1996 IT MI961279
(43) Date of publication of application: 07.01.1998
(73) Proprietor: Voith Riva Hydro S.p.A., 20144 Milano (IT)
(72) Inventor: Meazza, Gianpiero, 20075 Lodi (IT); Rovaro Brizzi, Mario, 20145 Milano (IT)
(74) Representative: Zanardo, Giovanni

(56) References cited:
- EP-A- 0 070 375
- US-A- 4 194 796

## Description

This invention relates to a hydrostatic bearing particularly for hydraulic machines of hydroelectric units.

For a better understanding of the invention it is important to clarify the difference between a hydrodynamic bearing and a hydrostatic bearing.

Both types of bearing operate correctly when the lubricant fluid film interposed between the parts in relative movement reaches the supporting pressure and hence a pressure sufficient to separate said parts in relative movement, so preventing them seizing by direct sliding contact. In hydrodynamic bearings the lubricant fluid film reaches the supporting pressure by the effect of the relative movement between the bearing parts. In hydrostatic bearings the lubricant fluid film reaches the supporting pressure by injecting pressurized lubricant fluid between the moving parts of the bearing. For example, US 3 501 205 discloses a hydrostatic bearing having the features of the preamble of claim 1.

However, in these hydrostatic bearings if the lubricant fluid injection is interrupted or deficient the hydrostatic bearings become seriously damaged.

Moreover, considering that they are used on hydraulic machines of hydroelectric units, damage to one bearing results in stoppage of the entire hydroelectric unit, with all the deriving consequences.

The object of the present invention is to obviate the aforesaid drawback by providing a hydrostatic bearing able to also operate under emergency conditions, so reducing any damage to a minimum.

This object is attained by a hydrostatic bearing in accordance with claim 1 to which reference should be made for brevity. Basically, the bearing of the invention achieves the stated object in that if one of the purification and/or filtration plants is faulty, the remaining purification and/or filtration plants can continue to supply the pressurized lubricant (water) for at least the time required for halting the hydroelectric unit, each set of hydrostatic support chambers being moreover dimensioned to be able to alone support the operating loads of the unit.

In other words, each bearing is as if it were formed from at least two redundant twin bearings, each of which is able to permit operation of the bearing, with the necessary minimum margin to ensure its integrity during the unit stoppage transient.

In the preferred embodiments, the bearing is divisible into two portions containing a set of support pockets. Said portions are functionally identical and can always operate simultaneously. As each of the two portions ensures operation with a sufficient margin of safety, it is apparent that during normal operation with both systems operative, the bearing operates under more favourable conditions and hence with a greater safety margin towards all problems connected with possible sudden accidental load variations due to hydraulic thrust pulsation and towards possible problems of mechanical origin such as expansion etc.

Each bearing portion housing one of the sets of support pockets is redundant but is not a passive element during normal operation.

Moreover, emergency operation with a single system due to accidental lack of one of the two systems does not result in deterioration of the bearing, hence requiring no maintenance work following an emergency situation.

The two bearing portions housing the sets of support pockets are totally independent and hence are redundant both with regard to fluid feed and with regard to the active support part.

The invention is illustrated by way of non-limiting example in figures 1 to 4 of the accompanying drawings.

Figure 1 is an elevational section through a first embodiment of a hydrostatic bearing of the invention, installed in a hydroelectric unit which is only partly visible.

Figure 2 is a section on the line II-II of Figure 1.

Figure 3 is an elevational section through a second embodiment of a hydrostatic bearing of the invention, installed in a hydroelectric unit which is only partly visible.

Figure 4 is a section on the line IV-IV of Figure 3.

Figure 5 is an elevational section through a hydrostatic bearing which is not an embodiment of the invention, installed in a hydroelectric unit which is only partly visible, whereby the chambers alternate as in US 3 501 205 A.

Figure 6 is a section on the line VI-VI of Figure 5.

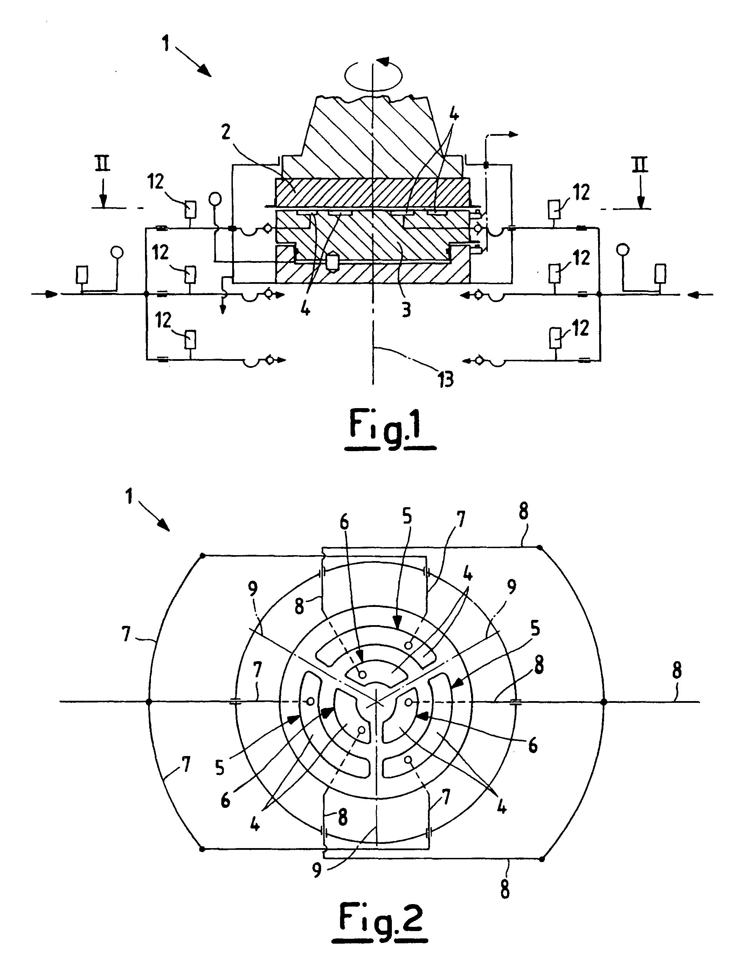

With reference to said figures and in particular to Figure 1, the hydrostatic bearing, indicated overall by 1, is applicable in particular to hydraulic machines of hydroelectric units. It comprises a first bearing element 2 and a second bearing element 3 which can move relative to each other and between which there can be interposed a film (not visible in the figures) of lubricant fluid which in the illustrated embodiment is water drawn from a penstock at a pressure sufficient to space the first element 2 from the second element 3. One of said bearing elements (preferably the second 3, which is the lower) carries in that surface facing the other 2 a plurality of hydrostatic support depressions or chambers 4. According to an important characteristic of the invention, the support chambers 4 are grouped to form at least one first set 5 and at least one second set 6 of concentric hydrostatic support chambers. Each of said sets 5 and 6 of hydrostatic support chambers 4 is dimensioned to be able to support by itself the operating loads, which are normally distributed between all said sets 5 and 6 of support chambers 4. Moreover each of said sets 5 and 6 of hydrostatic support chambers 4 comprises at least three physically separate hydrostatic support chambers 4 formed between the two diameters of the same circular ring. Finally, each of said sets 5 and 6 of hydrostatic support chambers 4 is fed with a lubricant fluid under pressure provided by a purification and/or filtration plant hydraulically separate from that or those which feed the remaining set or sets of support chambers. In this respect, as can be seen in Figure 2, the more outer first set 5 of chambers 4 is fed by a first plant indicated by 7, whereas the more inner second set 6 of chambers 4 is fed by a second plant indicated by 8.

In the embodiment shown in Figures 1 and 2, the hydrostatic bearing 1 comprises only two sets 5 and 6 of hydrostatic support chambers, each comprising only three hydrostatic support chambers 4, in which the hydrostatic support chambers 4 of both sets 5 and 6 are arranged between the same single group of three axes 9 which converge at the centre to form 120° angles.

The use of a plurality of sets of chambers arranged along concentric circular rings and each fed by its own plant hydraulically independent of the remainder offers the advantage that any possible damage to the facing surfaces of the bearing due to the presence in the lubricant fluid of suspended solid residues (for example having passed through the filters of one of the plants) does not totally compromise the operability of the bearing in that, even though such residues are entrained into rotation, their abrasive-destructive action is localized to only that set of chambers positioned on one and the same circular ring, so that the remaining set, which is redundant, can allow regular operation of the bearing at least for the time required to halt the machine.

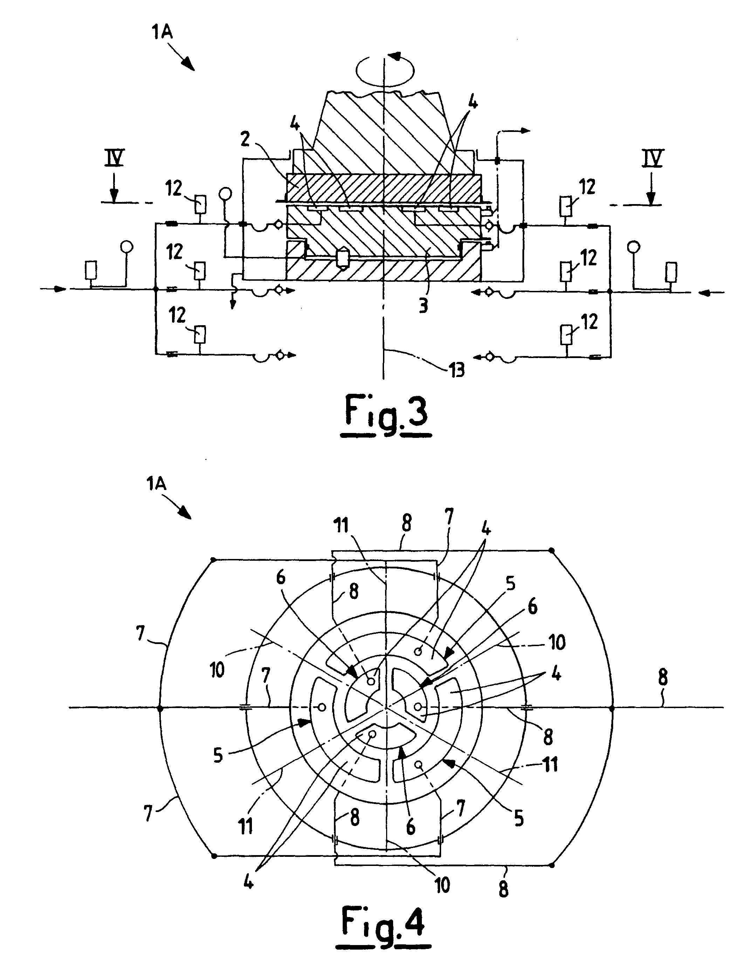

With particular reference to Figures 3 and 4 these show a second embodiment of the hydrostatic bearing indicated overall by 1A, which differs from the first, indicated by 1, in that the hydrostatic support chambers 4 of the two sets 5 and 6 are arranged about two groups 10 and 11 of three axes each. Each axis of said groups 10 and 11 of three axes meets the others at the centre such that with the remaining axes of the same group it forms angles of 120°. The two groups 10 and 11 of axes are positioned at 60° to each other. Besides offering the advantages of the first type of bearing (shown in Figures 1 and 2), this second type of bearing also achieves improved load distribution between the two systems, and equal emergency behaviour if a fault develops in one of the two.

In the bearings of the present invention the two sets 5 and 6 of chambers 4 are connected to two hydraulically independent plants 7 and 8. Under these conditions, each of the two chamber set and plant systems provides a redressing action by compensating any variations in the thickness of the lubricant fluid film along the periphery. Both in the first type of bearing 1 and in the second type of bearing 1A each chamber 4 is fed independently via a controllable throttle diaphragm 12 which enables the delivery pressure to be adjusted as the thickness of the lubricant film varies.

If the bearing elements oscillate about the machine axis 13, the pressure in the three chambers 4 of each set 5 or 6 is adjusted in the opposite sense to maintain the mean load constant. During normal operation the bearing load is distributed in virtually equal parts between the various sets 5 and 6 of chambers 4. In the case of reduced feed of one of the plants 7 or 8 by the effect of faults or by perforation of the diaphragms or filter blockage, that plant remaining in operation progressively assumes the load of the other while simultaneously reducing the thickness of the lubricant film. Appropriate protection systems (possibly electronic, not shown) measure the pressure reduction of the faulty plant, the pressure increase of the still efficient system, and the reduction in film thickness. When the extent of their variations from preset values reaches a first level an alarm is activated. When the deviation reaches a second level the hydroelectric unit is halted. Given that the feed plants also have inbuilt redundancy, this eventuality is to be considered exceptional and for this reason it is certainly possible to pass to shutdown without this appreciably compromising the availability of the hydroelectric unit. However, given the basis for these types of bearings it is not permissible to continue operation if total bearing redundancy is lacking.

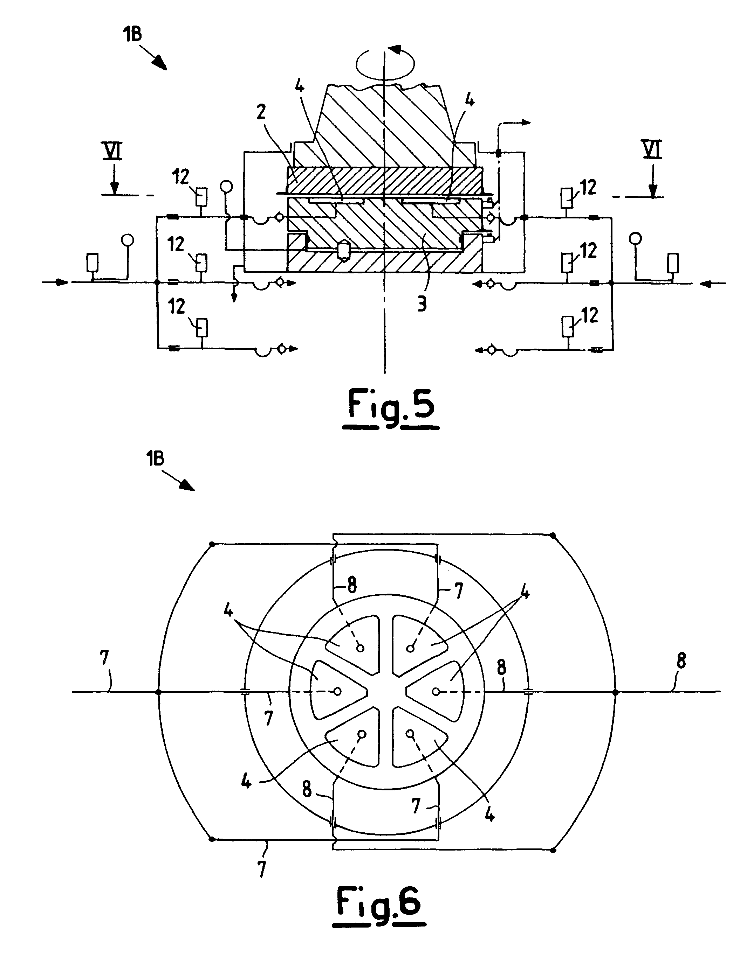

With particular reference to Figures 5 and 6 these show a hydrostatic bearing indicated overall by 1B, which is also applicable in particular to hydraulic machines of hydroelectric units. It comprises a first bearing element 2 and a second bearing element 3 which can move relative to each other and between which there can be interposed a film of lubricant fluid (not visible) at a pressure sufficient to space the first element 2 from the second element 3. One of said bearing elements (preferably the lower element 3) carries in that surface facing the other a plurality of hydrostatic support depressions or chambers 4 which are physically separate. Each of said hydrostatic support chambers 4 is fed with lubricant fluid (piped water under pressure) which originates from a purification and filtration plant hydraulically separate from that feeding the adjacent hydrostatic support chambers. In the illustrated embodiment the first purification and filtration plant 7 and the second 8 each feed a different three circumferentially alternate chambers. Again in this case each plant 7 and 8 withdraws the lubricant fluid from a different point of the penstock of the hydroelectric unit. This type of bearing is preferred where bearings of comparable reliability to the bearings described heretofore are desired, but of substantially lower cost. To obtain good balancing of the vertical or axial thrusts acting on the shaft, the bearing is provided with an even number of hydrostatic support chambers 4 and also with a controllable throttling diaphragm 12 for each chamber 4.

## Claims

1. A hydrostatic bearing (1) applicable in particular to hydraulic machines of hydroelectric units, comprising a first bearing element (2) and a second bearing element (3) which can move relative to each other and between which there can be interposed a film of lubricant fluid at a pressure sufficient to space the first element (2) from the second element (3), in which one of said bearing elements (2, 3) carries in that surface facing the other a plurality of hydrostatic support depressions or chambers (4), said bearing (1) comprising at least one first set (5) and at least one second set (6) of hydrostatic support chambers (4) in which each of said first and second sets (5, 6) of hydrostatic support chambers (4):
- is dimensioned to be able to support by itself the operating loads, which are normally distributed between all said sets (5, 6) of support chambers (4); and
- is fed with lubricant fluid under pressure provided by a purification or a filtration plant (7, 8), which is hydraulically separated from the plant feeding the remaining set or sets (5, 6) of support chambers (4),
**characterised in that** said first and second sets (5, 6) of hydrostatic support chambers (4) are arranged along concentric circular rings and **in that** each of said first and second sets (5, 6) comprises at least three physically separate hydrostatic support chambers (4), which are provided between the two diameters of the same circular ring.

2. A hydrostatic bearing as claimed in claim 1, **characterised by** comprising two sets (5, 6) of hydrostatic support chambers (4) each comprising three hydrostatic support chambers (4), in which the hydrostatic support chambers (4) of both sets (5, 6) are arranged between the same single group of three axes (9) which converge at the centre to form 120° angles.

3. A hydrostatic bearing as claimed in claim 1, **characterised by** comprising two sets (5, 6) of hydrostatic support chambers (4) each comprising three hydrostatic support chambers (4), in which the hydrostatic support chambers (4) of the two sets (5, 6) are arranged about two groups (10, 11) of three axes each, in which each group of axes converges at the centre such that each axis thereof forms angles of 120° with the remaining axes of the same group, said two groups (10, 11) of axes being positioned at 60° to each other.

4. A bearing as claimed in claim 1 **characterised in that** the lubricant fluid is water withdrawn from a penstock at different points for each purification or filtration plant (7, 8).

5. A bearing as claimed in claims 1 **characterised in that** each chamber (4) is fed independently via a controllable throttling diaphragm (12) which enables the delivery pressure to be adjusted as the lubricant film thickness varies.

## Patentansprüche

1. Hydrostatisches Lager (1) zur Verwendung insbesondere in hydraulischen Maschinen von hydroelektrischen Einheiten, umfassend ein erstes Auflageelement (2) und ein zweites Auflageelement (3), die relativ zueinander beweglich sind und zwischen denen ein Gleitmittelfilm mit einem Druck vorhanden sein kann, der ausreicht, um das erste Element (2) vom zweiten Element (3) im Abstand zu halten, wobei eines der Auflageelemente (2, 3) in der dem anderen zugewandten Oberfläche eine Mehrzahl von hydrostatischen Stützvertiefungen oder -kammern (4) trägt und das Lager (1) mindestens eine erste Gruppe (5) und mindestens eine zweite Gruppe (6) von hydrostatischen Stützkammern (4) aufweist, wobei jede der ersten und zweiten Gruppe (5, 6) von hydrostatischen Stützkammern (4) so dimensioniert ist, dass sie die Betriebsbelastungen, die normalerweise auf alle diese Gruppen (5, 6) von Stützkammern (4) aufgeteilt werden, selbst tragen kann und mit einem unter Druck stehenden Gleitmittel beaufschlagt wird, das von einer Reinigungs- oder Filtrationsanlage (7, 8) stammt, welche von der die restliche(n) Gruppe(n) (5, 6) von Stützkammern (4) beaufschlagenden Anlage hydraulisch getrennt ist, **dadurch gekennzeichnet, dass** die erste und die zweite Gruppe (5, 6) von hydrostatischen Stützkammern (4) entlang konzentrischer Kreisringe angeordnet sind und jede der ersten und zweiten Gruppe (5, 6) mindestens drei physisch voneinander getrennte hydrostatische Stützkammern (4) aufwiest, die zwischen den beiden Durchmessern ein- und desselben Kreisrings angeordnet sind.

2. Hydrostatisches Lager nach Anspruch 1, **dadurch gekennzeichnet, dass** es zwei Gruppen (5, 6) von hydrostatischen Stützkammern (4) umfasst, von denen jede drei hydrostatische Stützkammern (4) aufweist, wobei die hydrostatischen Stützkammern (4) der beiden Gruppen (5, 6) zwischen derselben Einzelgruppe von drei Achsen (9) angeordnet sind, die im Mittelpunkt unter Bildung eines Winkels von 120°C zusammenlaufen.

3. Hydrostatisches Lager nach Anspruch 1, **dadurch gekennzeichnet, dass** es zwei Gruppen (5, 6) von hydrostatischen Stützkammern (4) umfasst, von denen jede drei hydrostatische Stützkammern (4) aufweist, wobei die hydrostatischen Stützkammern (4) der beiden Gruppen (5, 6) um zwei Gruppen (10, 11) von jeweils drei Achsen angeordnet sind, wobei alle Gruppen von Achsen im Mittelpunkt zusammenlaufen, so dass jede Achse einen Winkel von 120°C mit den restlichen Achsen derselben Gruppe einschließt, wobei die beiden Gruppen (10, 11) von Achsen in einem Winkel von 60°C zueinander angeordnet sind.

4. Lager nach Anspruch 1, **dadurch gekennzeichnet, dass** das Gleitmittel Wasser ist, welches aus einer Druckrohrleitung an verschiedenen Stellen für jede Reinigungs- oder Filtrationsanlage (7, 8) abgezogen wird.

5. Lager nach Anspruch 1, **dadurch gekennzeichnet, dass** jede Kammer (4) unabhängig über eine steuerbare Drosselmembran (12) beaufschlagt wird, welche bei einer Veränderung der Dicke des Gleitmittelfilms eine Einstellung des Abgabedrucks ermöglicht.

## Revendications

1. Palier hydrostatique (1 ) applicable en particulier à des machines hydrauliques d'unités hydroélectriques, comprenant un premier élément de palier (2) et un second élément de palier (3) qui peuvent être mobiles l'un par rapport à l'autre et entre lesquels peut être interposé un film de fluide lubrifiant à une pression suffisante pour espacer le premier élément (2) du second élément (3), dans lequel l'un desdits éléments de palier (2, 3) porte dans cette surface opposée à l'autre une pluralité de creux ou chambres de support hydrostatiques (4), ledit palier (1) comprenant au moins un premier ensemble (5) et au moins un second ensemble (6) de chambres de support hydrostatiques (4) dans lesquelles chacun desdits premier et second ensembles (5, 6) de chambres de support hydrostatiques (4) :
- est dimensionné pour être capable de supporter de lui-même les charges de fonctionnement, qui sont généralement réparties entre tous lesdits ensembles (5, 6) des chambres de support (4) ; et
- est alimenté en fluide lubrifiant sous pression fourni par une Installation de purification ou de filtration (7, 8) qui est séparée d'un point de vue hydraulique de l'installation alimentant l'ensemble ou les ensembles restants (5, 6) de chambres de support (4), **caractérisé en ce que** lesdits premier et second ensembles (5, 6) de chambres de support hydrostatiques (4) sont disposés le long d'anneaux circulaires concentriques et **en ce que** chacun desdits premier et second ensembles (5, 6) comprend au moins trois chambres de support hydrostatiques physiquement séparées (4), qui sont prévues entre les deux diamètres du même anneau circulaire.

2. Palier hydrostatique selon la revendication 1, **caractérisé par** le fait de comprendre deux ensembles (5, 6) de chambres de support hydrostatiques (4) comprenant chacun trois chambres de support hydrostatiques (4), dans lequel les chambres de support hydrostatiques (4) des deux ensembles (5, 6) sont disposées entre le même groupe unique de trois axes (9) qui convergent au niveau du centre pour former des angles de 120°.

3. Palier hydrostatique selon la revendication 1, **caractérisé par** le fait de comprendre deux ensembles (5, 6) de chambres de support hydrostatiques (4) comprenant chacun trois chambres de support hydrostatiques (4), dans lequel les chambres de support hydrostatiques (4) des deux ensembles (5, 6) sont disposées autour de deux groupes (10, 11) de trois axes chacun, dans lequel chaque groupe d'axes converge au niveau du centre de sorte que chaque axe de ceux-ci forme des angles de 120° avec les axes restants du même groupe, lesdits deux groupes (10, 11 ) d'axes étant positionnés à un angle de 60° l'un par rapport à l'autre.

4. Palier selon la revendication 1, **caractérisé en ce que** le fluide lubrifiant est de l'eau retirée d'une conduite forcée en différents points pour chaque installation de purification ou de filtration (7, 8).

5. Palier selon la revendication 1, **caractérisé en ce que** chaque chambre (4) est alimentée indépendamment via un diaphragme d'étranglement contrôlable (12) qui permet à la pression de livraison d'être ajustée à mesure que l'épaisseur du film de lubrifiant varie.
